# EUROPEAN PATENT APPLICATION

(11) **EP 2 109 075 A1**
(43) Date of publication of application: **14.10.2009**
(21) Application number: 09157604.1
(22) Date of filing: 08.04.2009
(51) Int. Cl.: G06Q 30/00

(54) **Information delivery apparatus and information delivery method**

(30) Priority: 10.04.2008 JP 2008102793
(71) Applicant: NTT DoCoMo, Inc., Chiyoda-ku Tokyo 100-6150 (JP)
(72) Inventor: Fukuzawa, Yusuke, Tokyo 100-6150 (JP); Naganuma, Takefumi, Tokyo 100-6150 (JP); Onogi, Midori, Tokyo 100-6150 (JP); Kurakake, Shoji, Tokyo 100-6150 (JP); Moriya, Tomoko, Tokyo 100-6150 (JP)
(74) Representative: Viering, Jentschura & Partner

(57) **Abstract**

The invention provides an information delivery apparatus and information delivery method that can improve the rate of access by a user. A task node designation unit acquires task information related to contents sent by a contents transmission unit, and the contents transmission unit sends the acquired task information to the user, thereby making it possible to assist the actions of the user suitably. Consequently, since task information that is related to the contents, for example, task information which can cause the user to consider performing an action of some kind in relation to the content can be also viewed, the user is encouraged to perform new actions, whereby the access rate to the content can be improved.

## Description

### BACKGROUND OF THE INTENTION

### Field of the Invention

The present invention relates to an information delivery apparatus and information delivery method for delivering information.

### Related Background Art

One technology for presenting contents relating to contents which are being browsed by a user is Contents Based Filtering method. In this Contents Based Filtering method, contents having the same characteristics as the contents currently being browsed are displayed simultaneously with the currently viewed contents.

Furthermore, technology is also known which uses this method in order to display advertising information relating to a homepage which is viewed during Internet browsing (see Japanese Patent Application Publication No. 2007-293463).

However, if only the contents or only the title of advertising information is displayed, then in many cases the actual content is unclear and the rate of access being made to the related contents is not high. In particular, in cases where the display region for each unit content is extremely small, such as on a mobile phone, then it can be expected that the rate of access to that content will decline if only the title of the content is displayed.

### SUMMARY OF THE INVENTION

Therefore, it is an object of the present invention to provide an information delivery apparatus and an information delivery method whereby the rate of access by users can be improved.

In order to achieve the object described above, the information delivery apparatus according to the present invention comprises: task information storage means for storing task information for assisting user actions; contents transmission means for transmitting contents to a user; acquisition means for acquiring from the task information storage means task information relating to the contents sent by the contents transmission means; and task information transmission means for transmitting to the user the task information acquired by the acquisition means.

Furthermore, the information delivery method of the present invention is an information delivery method for an information delivery apparatus having task information storage means for storing task information for assisting user actions, the method comprising: a contents transmission step of transmitting contents to a user; an acquisition step of acquiring from the task information storage means task information relating to the contents sent in the contents transmission step; and a task information transmission step of transmitting to the user the task information acquired in the acquisition step.

According to this invention, by acquiring task information relating to transmitted contents and sending the acquired task information to the user, it is possible to assist user actions in an appropriate fashion. For example, if the user seeks to view a particular content, then it is not possible to improve the access rate for that content simply by making it possible to view related contents. On the other hand, by also making it possible to view task information that is related to the content, for example, task information that can cause the user to consider performing an action of some kind in relation to the content, then the user can be encouraged to perform new actions, and therefore the access rate of the content can be improved.

Furthermore, in the information delivery apparatus according to the present invention, desirably, the task information storage means stores a task characteristics vector indicating characteristics of the task information; the contents transmission means acquires a contents characteristics vector of the contents before sending the contents; and the acquisition means calculates similarities between the contents characteristics vector acquired by the contents transmission means and the task characteristics vector stored in the task characteristics vector storage means, respectively, and acquires task information on the basis of these similarities.

According to the present invention, the respective similarities between the contents characteristics vector of the contents and the task characteristics vectors of the respective task information are calculated and task information is acquired on the basis of these similarities, thereby making it possible to judge the similarity on the basis of vectors and therefore making it possible to judge the similarity more accurately.

Desirably, the information delivery apparatus according to the present invention further comprises frequency information storage means for storing frequency information indicating frequency selected for respective task information; and the acquisition means also selects task information on the basis of the frequency information stored in the frequency information storage means.

According to the present invention, it is possible to present more suitable task information to the user by choosing task information on the basis of the frequency information. In other words, there is a high probability that task information that has never been selected is not useful to the user. Consequently, by carrying out a selection procedure whereby task information of this kind is not chosen, or is moved down the display sequence, for instance, then it is possible to present task information which is liable to be used by the user.

According to the present invention, it is possible to encourage the user to perform new actions, and therefore it is possible to raise the access rate for a content.

### BRIEF DESCRIPTION OF THE DRAWINGS

Fig. 1 is a diagram showing the system composition of a communications system according to an embodiment of the present invention;
Fig. 2 is a block diagram showing the functions of an information delivery server 200 according to the present embodiment;
Fig. 3 is a hardware composition diagram of an information delivery server 200;
Fig. 4 is an explanatory diagram showing table information which is stored by a task information management table 204;
Fig. 5 is a block diagram showing the functional composition of a mobile telephone 100;
Fig. 6 is a sequence diagram showing the sequence of processing between a mobile telephone 100 and an information delivery server 200;
Fig. 7 is a flowchart showing processing carried out by the information delivery server 200; and
Fig. 8 is an explanatory diagram showing a screen displayed on a recommended task display unit 103 of a mobile telephone 100.

### DESCRIPTION OF THE PREFERRED EMBODIMENTS

Embodiments of the present invention will now be described with reference to the accompanying drawings. Where possible, the same parts will be labeled with the same reference numerals and duplicated description is omitted.

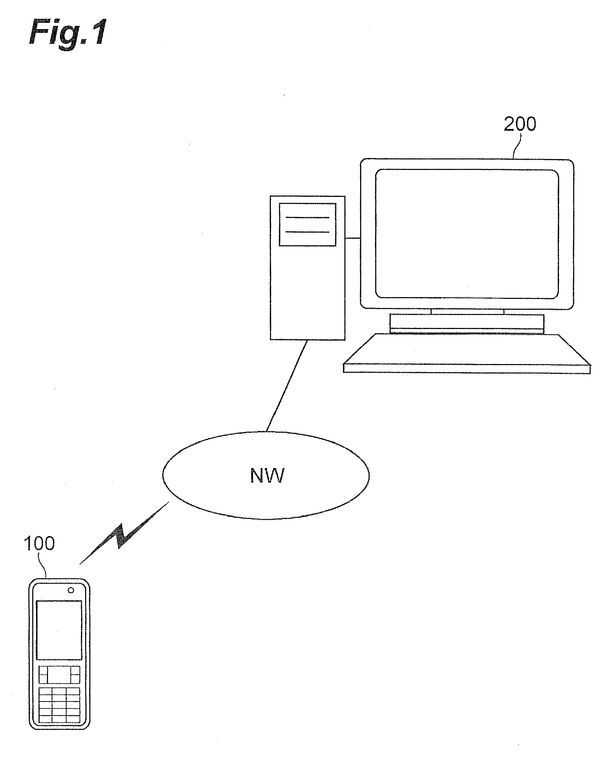

Fig. 1 is a diagram showing the composition of the communications system according to the present embodiment. This communications system comprises a mobile telephone 100 and an information delivery server 200. The mobile telephone 100 requests contents from the information delivery server 200 on the basis of an operation performed by a user. The information delivery server 200 gathers contents from a contents provider (not illustrated), in accordance with this request, and sends the contents to the mobile telephone 100.

Moreover, this information delivery server 200 sends task information which is related to the contents being sent, together with the contents. This task information is information instructing the actions of the user, and serves to assist a state of the user viewing the contents or seeking to perform an action. For example, if the user has been browsing contents relating to "Kyoto", then task information such as task information for assisting in "Go on a trip", task information for assisting in "Buy a souvenir", task information for assisting in "Explore temples", or the like, is appended.

The mobile telephone 100 receives the contents and the task information, and if the user selects any of the offered task information while viewing the contents, then the user can acquire content which assists in the related action. For instance, in the example described above, if the user selects "Go on a trip", then the mobile telephone 100 can access the homepage of a travel company or access a homepage for making express train reservations.

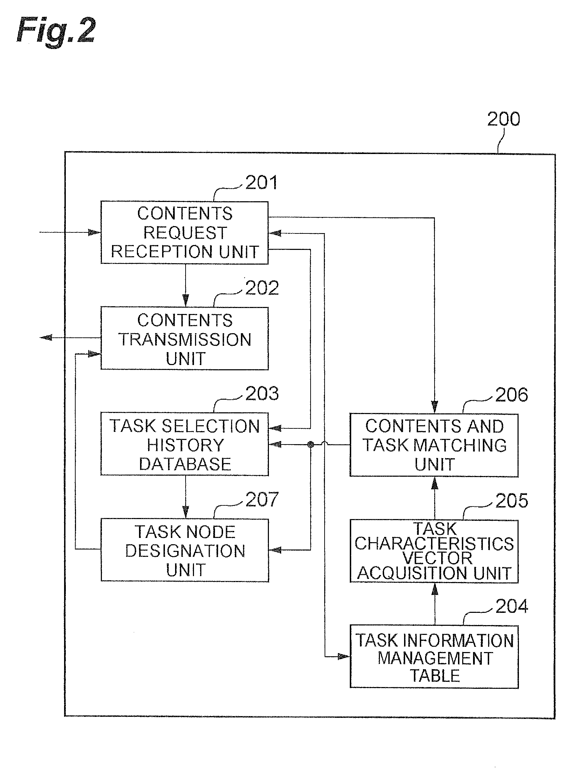

Next, the composition of the information delivery server 200 which is used in this communications system will be described. Fig. 2 is a block diagram showing the functions of the information delivery server 200 according to the present embodiment. This information delivery server 200 comprises: a contents request reception unit 201, a contents transmission unit 202, a task selection database, a task information management table 204, a task characteristics vector acquisition unit 205, a contents and task matching unit 206, and a task node designation unit 207.

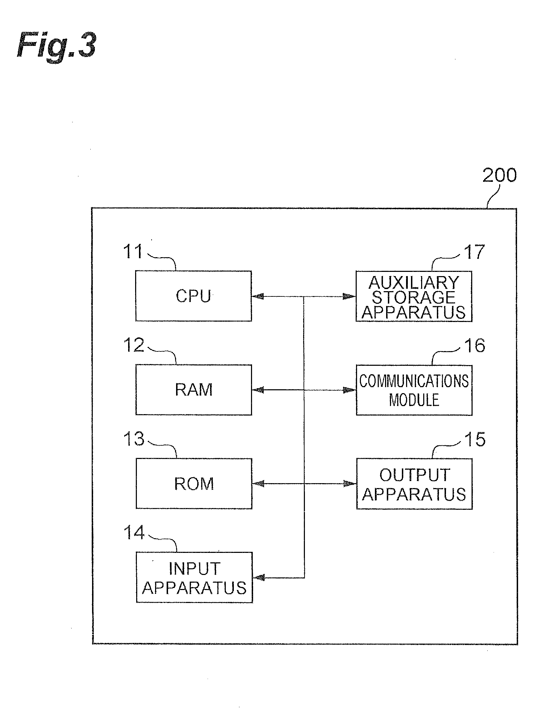

The information delivery server 200 is achieved by a hardware composition as shown in Fig. 3. Fig. 3 is a diagram of the hardware composition of the information delivery server 200. In physical terms, the information delivery server 200 shown in Fig. 2 is constituted by a computer system comprising a CPU 11, a RAM 12 and ROM 13 which are main storage apparatuses, an input apparatus 14 such as a keyboard and a mouse, an output apparatus 15 such as a display monitor, a communications module 16 which forms a data transmission and reception device, such as a network card, an auxiliary storage apparatus 17 such as a hard disk, and the like, as shown in Fig. 3. The respective functions shown in Fig. 2 are realized by reading prescribed computer software into the hardware such as the CPU 11, RAM 12 and the like shown in Fig. 3, and causing the input apparatus 14, the output apparatus 15 and the communications module 16 to operate under the control of the CPU 11, as well as reading out and writing data from and to the RAM 12 and the auxiliary storage apparatus 17. The respective functional blocks are described below on the basis of the functional blocks shown in Fig. 2.

The contents request reception unit 201 is a unit which receives a request for contents or task information from a mobile telephone 100, and acquires contents or task information in accordance with the request. The contents request reception unit 201 outputs the acquired contents (or contents indicated by task information) to the contents transmission unit 202, and also outputs information indicating the requested task information to the task selection history database 203.

The contents transmission unit 202 is a unit which sends, to the mobile telephone 100, the contents output from the content request reception unit 201 and the task information designated by the task node designation unit 207. The transmitted task information is processed so as to be selectable by the user on the mobile telephone 100 and to include anchors which enable access to subsidiary task information or contents.

The task selection history database 203 is a database which stores historical information, such as the frequency with which task information has been selected. When one task information has been selected via the contents request reception unit 201, the task selection history database 203 stores information indicating that task information (for example, a task ID), in association with the selection frequency (number of times).

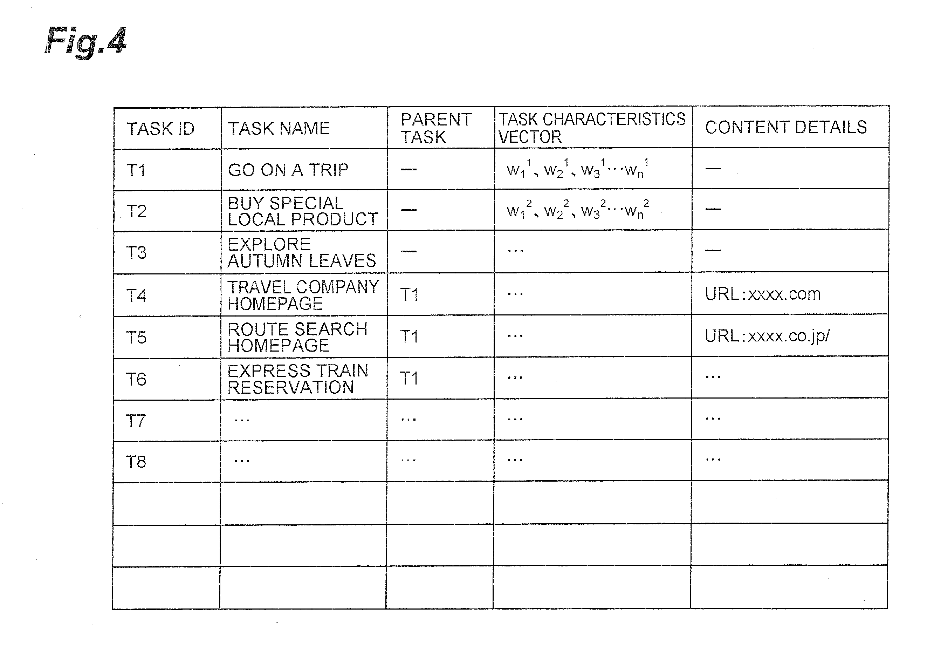

The task information management table 204 is a unit which stores task characteristics vectors indicating the characteristics of the task information. Fig. 4 is an explanatory diagram showing table information which is stored in the task information management table 204. As shown in Fig. 4, the task information management table 204 stores, in mutually associated fashion, a task ID which identifies the task, the task name, information indicating a relationship with a parent task, a task characteristics vector, and content details. For example, in Fig. 4, "T1" is stored as a task ID, "Go on a trip" is stored as a task name, "-" is stored as a parent task since there is no parent task setting, "(w 11, w21, w31, ..., wn1)" is stored as a task characteristics vector, and "URL. xxxx.com" is stored as the content details. The task characteristics vector is constituted by n parameters, which record a value of 1 if the task is related to that parameter and a value of 0 if the task is not related to that parameter. For example, if the parameters which constitute the vector are specified as "Kyoto", "travel", "tourism", "art" "sports", and so on, then the "Kyoto" parameter is set to 1, "travel" is set to 1, "tourism" is set to 1, "arts" is set to 0 and "sports" is set to 0.

The task characteristics vector acquisition unit 205 is a unit which acquires a task characteristics vector from the task information management table 204 on the basis of an instruction from the contents and task matching unit 206, when determining the task information to be added to the contents.

The contents and task matching unit 206 is a unit which calculates the degree of similarity between the contents characteristics vector of the contents and the task characteristics vector. More specifically, the contents and task matching unit 206 calculates the respective inner products of the contents characteristics vector of the contents acquired by the contents request reception unit 201 and the plurality of task characteristics vectors acquired by the task characteristics vector acquisition unit 205.

The task node designation unit 207 is a unit which judges and designates whether or not to send recommended task information on the basis of the degree of similarity (inner product values) calculated by the contents and task matching unit 206, and extracts top Nth task information sets having the highest inner product values calculated by the contents and task matching unit 206. In the present embodiment, it is also possible to extract only task information having a prescribed frequency or higher, on the basis of the frequency information which indicates the frequency of the task information selected by the user and which is stored in the task selection history database 203.

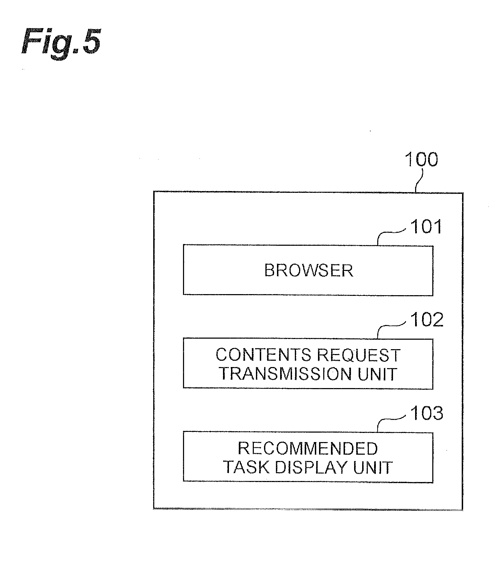

Next, the mobile telephone 100 will be described. Fig. 5 is a block diagram showing the functional composition of the mobile telephone 100. This mobile telephone 100 has, in addition to the normal communications functions of a general mobile telephone, a browser for carrying out data communications, a contents request transmission unit, and a recommended task display unit. The mobile telephone 100 is constituted by a CPU, RAM, ROM, and the like, similarly to the hardware composition shown in Fig. 3, and the CPU operates in accordance with a program stored in the ROM.

The browser 101 is a function consisting of an application for connecting to the Internet. The user is able to browse contents and task information and select one set of task information, by operating this browser 101. The browser 101 outputs the selection to the contents request transmission unit 102.

The contents request transmission unit 102 is a unit which sends a request for the contents selected by operating the browser 101, to the information delivery server 200.

The recommended task display unit 103 is a unit which displays contents and task information sent from the information delivery server 200. The user is able to display contents for assisting user actions, by selecting any one of a plurality of task information displayed by this unit.

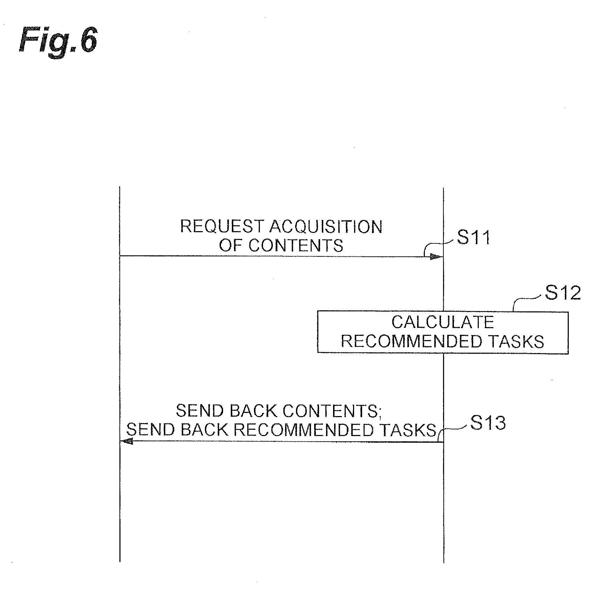

Next, the operations of the mobile telephone 100 and the information delivery server 200 having the foregoing compositions will be described. Fig. 6 is a sequence diagram showing a sequence of processing between the mobile telephone 100 and the information delivery server 200.

As shown in Fig. 6, in the mobile telephone 100, the user makes a contents acquisition request by operating the browser 101 (S11). In the information delivery server 200, when the contents request is received by the contents request reception unit 201, a contents acquisition process and a recommended task calculation process are carried out, and recommended task information is generated (S12). The contents and recommended task information are sent to the mobile telephone 100 by the contents transmission unit 202 (S13).

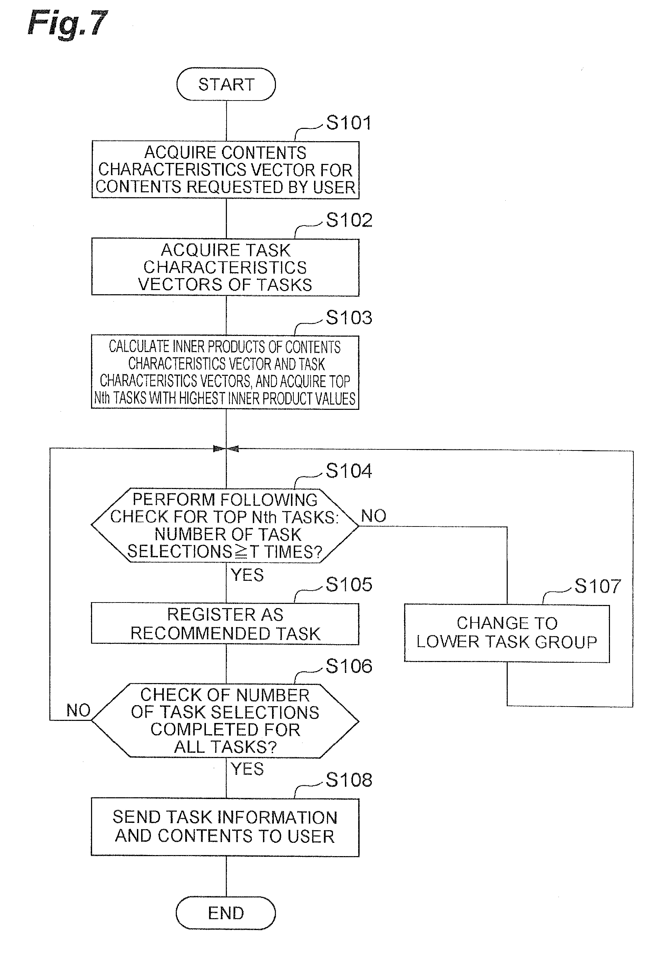

Next, the detailed processing in step S12 above will be described. Fig. 7 is a flowchart showing the processing carried out by the information delivery server 200.

The contents requested by the user are acquired by the contents request reception unit 201, and the contents characteristics vector of the contents is acquired (S101). Thereupon, the task characteristics vector acquisition unit 205 acquires respective task information, one by one, from the task information management table 204 (S102).

The contents and task matching unit 206 calculates the inner products of the contents characteristics vector and task characteristics vectors, and the task node designation unit 207 arranges the task information in the order of the inner product values, and determines and acquires the top Nth task information sets having the highest inner product values (S103). Furthermore, the task node designation unit 207 then judges in respect of each of the Nth task information sets thus acquired whether or not the number of task selections is equal to or greater than T, on the basis of the information stored in the task selection history database 203 (S104).

Here, if it is judged that the number of task selections is equal to or greater than T (S104: YES), then the task node designation unit 207 registers the task information as recommended task information (S105). The task node designation unit 207 then judges whether or not the checking of the number of task selections has been completed in respect of all of the task information, and if it has not yet been completed, then the checking of the number of task selections is carried out in respect of the next task information (S 104). Furthermore, if it is judged that the number of task selections is not equal to or greater than T, then a process is carried out for rewriting the task to a subordinate task group, in other words, for moving the task to the lower (Nth) task information sets (S 107).

When this rearrangement processing has been carried out for all Nth task information sets (S106 : YES), then the contents transmission unit 202 sends the recommended task information indicated by the rearranged order, together with the contents, to the mobile telephone 100 (S108). At S107, processing is carried out for changing to a lower task group, but instead of this, it is also possible to carry out processing for excluding information from the recommended task information.

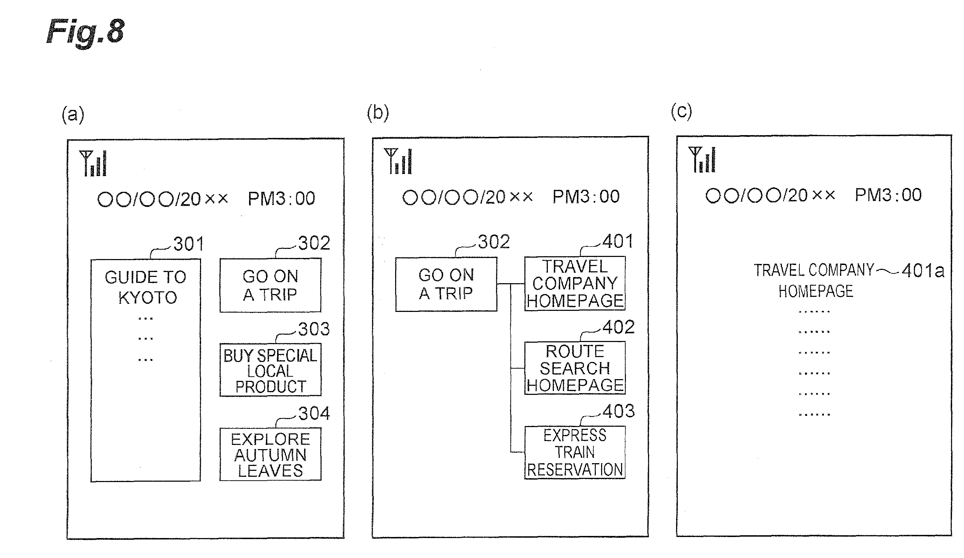

An example of the screen which is displayed during this processing is shown. Fig. 8 is an explanatory diagram showing a screen which is displayed on the recommended task display unit 103 of the mobile telephone 100. As shown in (a) of Fig. 8, when a content is requested by the mobile telephone 100 (user) via the browser 101, the information delivery server 200 decides on three task information on the basis of the contents characteristics vector of the contents that are to be transmitted, and sends this task information together with the contents. In the mobile telephone 100, the contents and task information are received from the information delivery server 200, and the recommended task display unit 103 displays the received contents 301 and task information 302 to 304. Here, "Guide to Kyoto" is displayed as the contents, and "Go on a trip", "Buy a special local product" and "Explore Autumn leaves", are displayed as task information.

If the user operates the browser 101 and selects task information 302, for instance, then the mobile telephone 100 (contents request transmission unit 102) sends this selection to the information delivery server 200. When this is received by the contents request reception unit 201 in the information delivery server 200, corresponding task information (or contents) is acquired from the task information management table 204. The contents transmission unit 202 then sends the contents thus acquired to the mobile telephone 100. This is received in the mobile telephone 100 and the recommended task display unit 103 displays the screen shown in (b) of Fig. 8. Here, since the subsidiary task information 401 to 403 are specified in relation to the parent task of the task information 302, then subsidiary task information 401 to 403 are sent by the information delivery server 200 and displayed.

Here, if the user selects subsidiary task information 401, then the information delivery server 200 accesses the related URL, acquires the contents associated with the task information, and sends this to the mobile telephone 100. In (c) of Fig. 8, the contents 401 a are displayed when the subsidiary task information 401 is selected. Here, the homepage of a travel company is delivered as content for assisting the user is taking a trip.

Next, the action and beneficial effects of the information delivery server 200 according to the present embodiment will be explained. In the information delivery server 200, the task node designation unit 207 acquires task information related to the contents sent by the contents transmission unit 202, and the contents transmission unit 202 sends the task information thus acquired to the user, thereby making it possible to assist the actions of the user in an appropriate fashion. For example, if the user wishes to see a particular content, then it is not possible to improve the access rate to that content simply by making it possible to view related contents. On the other hand, by also making it possible to view task information that is related to the content, for example, task information that can cause the user to consider performing an action of some kind in relation to the content, as in the present invention, then the user can be encouraged to perform new actions, and therefore the access rate of the content can be improved.

Here, the judgment of the degree of similarity is carried out in the following way. More specifically, in the information delivery server 200, the task information management table 204 stores task characteristics vectors indicating the characteristics of respective task information, and when the content request reception unit 201 acquires content that is to be sent, the content characteristics vector of that content is acquired. The contents and task matching unit 206 then respectively calculates the degree of similarity, in other words, the inner product values, of the acquired contents characteristics vector and the task characteristics vectors, and acquires task information on the basis of these inner product values. In the present embodiment, only the top Nth task information sets having the highest inner product values are acquired.

By this means, the similarities (inner product values) of the contents characteristics vector of the contents and the task characteristics vector of the respective task information are calculated respectively, and by acquiring the task information on the basis of these similarities (inner product values), it is possible to judge the similarity on the basis of vectors and therefore it is possible to judge the similarity accurately.

Furthermore, in the information delivery server 200 according to the present embodiment, the task selection history database 203 stores the selection frequency with which each task information has been selected, and the task node designation unit 207 chooses task information on the basis of the history information. By this means, it is possible to present more appropriate task information to the user. In other words, there is a high probability that task information that has never been selected is not useful to the user. Consequently, by carrying out a selection procedure whereby task information of this kind is not chosen, or is moved down the display sequence, for instance, then it is possible to present task information which is liable to be used by the user.

## Claims

1. An information delivery apparatus, comprising:
task information storage means for storing task information for assisting user actions;
contents transmission means for transmitting contents to a user;
acquisition means for acquiring from the task information storage means task information relating to the contents sent by the contents transmission means; and
task information transmission means for transmitting to the user the task information acquired by the acquisition means.

2. The information delivery apparatus according to claim 1, wherein
the task information storage means stores a task characteristics vector indicating characteristics of the task information;
the contents transmission means acquires a contents characteristics vector of the contents before sending the contents; and
the acquisition means calculates similarities between the contents characteristics vector acquired by the contents transmission means and the task characteristics vector stored in the task characteristics vector storage means, respectively, and acquires task information on the basis of these similarities.

3. The information delivery apparatus according to claim 1 or 2, further comprising a frequency information storage means for storing frequency information indicating frequency selected for respective task information, wherein
the acquisition means also selects task information on the basis of the frequency information stored in the frequency information storage means.

4. An information delivery method for an information delivery apparatus having task information storage means for storing task information for assisting user actions,
the method comprising:
a contents transmission step of transmitting contents to a user;
an acquisition step of acquiring from the task information storage means task information relating to the contents sent in the contents transmission step; and
a task information transmission step of transmitting to the user the task information acquired in the acquisition step.
